(19) **Europäisches Patentamt**

**European Patent Office**

**Office européen des brevets**

(11) **EP 1 137 221 B1**

(12) **EUROPÄISCHE PATENTSCHRIFT**

| | |
|---|---|
| (45) Veröffentlichungstag und Bekanntmachung des Hinweises auf die Patenterteilung: **13.09.2006 Patentblatt 2006/37** | (51) Int Cl.: **H04L 9/22** (2006.01) |

(21) Anmeldenummer: **00106327.0**

(22) Anmeldetag: **23.03.2000**

(54) **Vorrichtung und Verfahren zur Erhöhung der Betriebssicherheit und Gleichmässigkeit einer Rauschquelle**

Method and apparatus for increasing the security and regularity of a noise source

Procédé et dispositif pour augmenter la sécurité et la régularité d'un générateur de bruit

(84) Benannte Vertragsstaaten:
**AT BE CH CY DE DK ES FI FR GB GR IE IT LI LU MC NL PT SE**

(43) Veröffentlichungstag der Anmeldung:
**26.09.2001 Patentblatt 2001/39**

(73) Patentinhaber: **Infineon Technologies AG 81669 München (DE)**

(72) Erfinder: **Janssen, Norbert 81667 München (DE)**

(74) Vertreter: **Epping - Hermann - Fischer Patentanwaltsgesellschaft mbH Ridlerstrasse 55 80339 München (DE)**

(56) Entgegenhaltungen:
**US-A- 5 414 771      US-A- 5 778 069**

**Beschreibung**

Die Erfindung betrifft eine Vorrichtung und ein Verfahren zur Erhöhung der Betriebssicherheit und Gleichmäßigkeit einer Rauschquelle.

Kryptographische Verfahren benötigen in vielen Fällen Zufallszahlen. Zufallszahlen werden gerne durch Digitalisierung des Ausgangssignals einer Quelle für zum Beispiel weißes Rauschen erzeugt.

In dem Dokument US 5,414,771 ist eine Anordnung zum Generieren einer Zufallszahl beschrieben, bei der Ausgangswerte einer digitalen und einer analogen Rauschquelle kombiniert werden. Ferner ist ein Schieberegister als Zwischenspeicher vorgesehen, indem der kombinierte Werte und der Ausgangswert des Schieberegisters zu einem Eingangswert des Schieberegisters verknüpft werden. Die darart generierten Zufallsfolgen werden für auf Zufallsfolgen basierende Verschlüsselungs- und Entschlüsselungsverfahren verwendet.

Aus der US 5,778,089 ist ein Verfahren zur Generierung eines Schlüssels für auf Pseudozufallszahlen basierende Verschlüsselungs- und Entschlüsselungsverfahren bekannt, der durch eine Hash-Funktion aus einem Satz Eingangsdaten generiert wird.

Ein möglicher Angriff gegen ein solches Sicherheitssystem kann nun bei der physikalischen Rauschquelle ansetzen.

Nimmt durch physikalische Attacken eines Angreifers bedingt die Güte einer physikalischen Rauschquelle ab, so ist damit die Sicherheit des Gesamtsystems gefährdet.

Außerdem unterliegen die bekannten physikalischen Rauschquellen starken Performanceschwankungen in Folge von Schwankungen in der Fertigungstechnologie.

Es ist daher Aufgabe der vorliegenden Erfindung, einerseits eine physikalische Attacke eines Angreifers auf eine physikalische Rauschquelle über einen bestimmten Zeitraum abwenden zu können, und andererseits die Performance einer Rauschquelle ohne Verschlechterung der Güte der Rauschdaten auf einen konstanten Wert einzustellen.

Aus dem Stand der Technik sind keine Lösungen für diese Probleme bekannt.

Erfindungsgemäß wird diese Aufgabe dadurch gelöst, daß dem Ausgang der Rauschquelle ein Entropiespeicher nachgeschaltet ist, dem eine festverdrahtete Einwegfunktion direkt nachgeschaltet ist, oder daß die Ausgangswerte der Rauschquelle zwischengespeichert werden und die Ausgangswerte der Rauschquelle direkt nach der Zwischenspeicherung mittels einer festverdrahteten mathematischen Einwegfunktion umgerechnet werden.

Als Entropiespeicher ist dabei ein rückgekoppeltes Schieberegister besonders geeignet.

Um einen Angriff auf die Rauschquelle weiter zu erschweren, kann dem Entropiespeicher vorzugsweise eine Einwegfunktion nachgeschaltet sein. Die Ausgangswerte der Rauschquelle werden vorzugsweise nach der Zwischenspeicherung im Entropiespeicher mittels einer mathematischen Einwegfunktion umgerechnet.

Als Einwegfunktion ist eine kryptographische Hashfunktion besonders gut geeignet.

Vorzugsweise ist diese Einwegfunktion als fest verdrahtete Schaltung ausgeführt, da nur so vermieden werden kann, daß ein Angreifer auf den Output der Rauschquelle und den Output des Entropiespeichers zugreift.

Um eine gleichmäßige Performance der Rauschquelle zu erzielen, ist es besonders bevorzugt, den Entropiespeicher mit einer konstanten Frequenz auszulesen, die niedriger ist, als die Performance der Rauschquelle. Die Weiterverarbeitung der im Entropiespeicher zwischengespeicherten Ausgangswerte der Rauschquelle erfolgt dabei mit einem konstanten Takt, der niedriger ist, als die Performance der Rauschquelle.

Auf die Ausgangswerte der Rauschquelle und des Entropiespeichers darf nicht zugegriffen werden.

Die vorliegende Erfindung wird im folgenden anhand der in der Zeichnung dargestellten Ausführungsbeispiele näher erläutert. Es zeigt:

Figur 1 die erfindungsgemäße Absicherung einer physikalischen Rauschquelle über Entropiespeicher und Einwegfunktion; und

Figur 2 die Erzielung einer gleichmäßigen Performance der physikalischen Rauschquelle durch Taktung des Entropiespeichers mit Sollfrequenz.

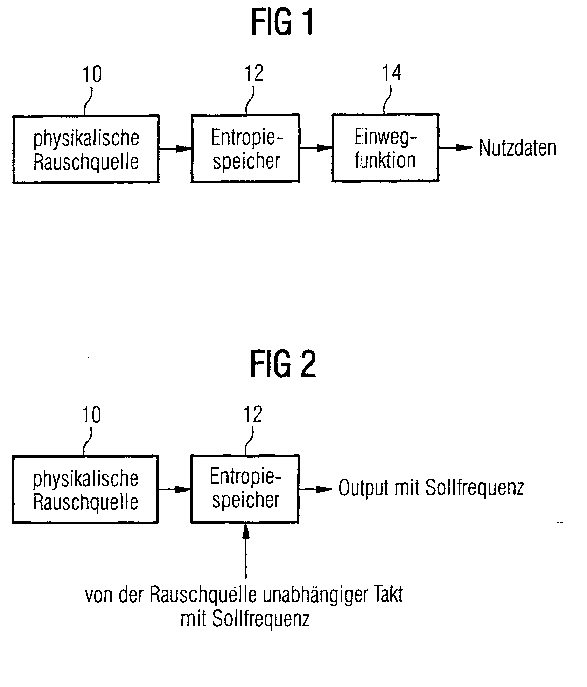

Wie in Figur 1 dargestellt ist, kann eine physikalische Attacke eines Angreifers auf eine physikalische Rauschquelle 10 über einen bestimmten Zeitraum abgewendet werden, indem der vor dem Angriff ideale physikalischen Rauschquelle ein Entropiespeicher 12 nachgeschaltet wird.

Die Funktion des Entropiespeichers soll im folgenden erläutert werden:

Als Entropie bezeichnet man den Informationsgehalt einer Menge von Daten, z.B. eines Bitstroms, der die Ausgangsdaten eines Zufallszahlengenerators repräsentiert. Es gilt stets:

$$0 < \text{Entropie} \leq 1.$$

Häufig mißt man die Entropie in Prozent. Dann gilt:

$$0 \text{ \% } < \text{ Entropie } [\%] < 100 \text{ \%}$$

Hat die Entropie einer Datenmenge z.B. den Wert von 80 %, dann kann die Datenmenge um 100 % - 80 % = 20 % komprimiert werden. Die um 20% komprimierten Daten haben keine Redundanz mehr und besitzen daher die Entropie 100 %. Insbesondere kann man also die Entropie durch Komprimierung erhöhen. Ein LFSR (linear rückgekoppeltes Schieberegister), aus dem man keine Daten entnimmt, hat diese Eigenschaft. Ein LFSR ist daher ein Entropiespeicher.

Ist nach Auffüllen des Entropiespeichers 12 die Rauschgüte der physikalischen Quelle 10, beispielsweise bedingt durch einen Angriff, nicht mehr optimal, dann wird der Entropiespeicher 12 sukzessive bei Bitentnahmen entleert, so daß die Entropie des entnommenen Bitstroms erst nach einer einstellbaren Bitzahl merklich abnimmt. Die einstellbare Bitzahl ist gegeben durch die Kapazität des Entropiespeichers. Wie in Figur 1 dargestellt, wird also nach der physikalischen Rauschquelle 10 ein Entropiespeicher 12 eingefügt, dessen Input der Output der Rauschquelle ist. Als Entropiespeicher kann dabei beispielsweise ein rückgekoppeltes Schieberegister verwendet werden.

Um keinerlei Rückschlüsse auf die Ausgangsdaten der Rauschquelle zu ermöglichen, wird vorzugsweise nach dem Entropiespeicher 12 eine mathematische Einwegfunktion 14 eingefügt, deren Input der Output des Entropiespeichers 12 ist, und deren Output die Nutzdaten sind.

Eine Einwegfunktion ist eine mathematische Funktion, die sich zwar einfach in eine Richtung rechnen läßt, jedoch nur sehr schwer zu invertieren ist. Als Einwegfunktion ist beispielsweise eine kryptographische Hashfunktion verwendbar. Im Gegensatz zu Hashfunktionen sind LFSR's keine Einwegfunktionen, da sie trivial invertierbar sind.

In dem beschriebenen Ausführungsbeispiel kann auf den Output des Entropiespeichers 12 nach Einsetzen der Einwegfunktion 14 prinzipiell nicht mehr von außen zugegriffen werden. Auf diese Weise wird erfindungsgemäß sicher gewährleistet, daß ein Angreifer der physikalischen Rauschquelle keine Information über den inneren Zustand der physikalischen Rauschquelle erhalten kann. Aus diesem Grunde ist auch eine Softwareimplementierung der Einwegfunktion 14 nicht ratsam, da dann ein Zugriff auf die Ausgangsdaten des Entropiespeichers 12 nicht ausgeschlossen werden kann.

Unabhängig von einem Angriff von außen unterliegen physikalische Rauschquellen starken Performanceschwankungen z.B. in Folge von Schwankungen der Fertigungstechnologie. Eine weitere Aufgabe der vorliegenden Erfindung ist es, diese Leistung oder Performance der Rauschquelle ohne Verschlechterung der Güte der Rauschdaten auf einen konstanten Wert einstellen zu können. Auch zu diesem Zweck kann der der physikalischen Rauschquelle nachgeschaltete Entropiespeicher 12 dienen.

Wie in Fig. 2 dargestellt, wird der Entropiespeicher 12 zur Erzielung einer gleichmäßigeren Performance der Rauchquelle mit einem konstanten, von der Rauschquelle unabhängigen Takt betrieben, dessen Frequenz dem Sollwert entspricht. Die Performance der Rauschquelle 10 muß größer als dieser Sollwert sein, damit der aus dem Entropiespeicher 12 entnommene Bitstrom eine Entropie größer oder gleich der Entropie der Rauschquelle hat.

Selbstverstänndlich können die in Fig. 1 und 2 beschriebenen Maßnahmen auch kombiniert werden, so daß der Entropiespeicher 12 sowohl mit einer von der Rauschquelle unabhängigen Taktfrequenz getaktet wird als auch dem Entropiespeicher eine Einwegfunktion 14 nachgeschaltet ist.

**Patentansprüche**

1. Vorrichtung zur Erhöhung der Betriebssicherheit und Gleichmäßigkeit einer Rauschquelle, wobei dem Ausgang der Rauschquelle (10) ein Entropiespeicher (12) nachgeschaltet ist, **dadurch gekennzeichnet, daß** dem Entropiespeicher (12) eine festverdrahtete Einwegfunktion (14) direkt nachgeschaltet ist.

2. Vorrichtung nach Anspruch 1, **dadurch gekennzeichnet, daß** als Entropiespeicher (12) ein rückgekoppeltes Schieberegister vorgesehen ist.

3. Vorrichtung nach Anspruch 1 oder 2, **dadurch gekennzeichnet, daß** als Einwegfunktion (14) eine kryptographische Hashfunktion vorgesehen ist.

4. Vorrichtung nach Anspruch 1 oder 2, **dadurch gekennzeichnet, daß** der Entropiespeicher (12) mit einer konstanten Frequenz ausgelesen wird, die niedriger ist, als die Performance der Rauschquelle.

5. Verfahren zur Erhöhung der Betriebssicherheit und Gleichmäßigkeit einer Rauschquelle, wobei die Ausgangswerte der Rauschquelle zwischengespeichert werden, **dadurch gekennzeichnet, daß** die Ausgangswerte der Rauschquelle direkt nach der Zwischenspeicherung mittels einer festverdrahteten mathematischen Einwegfunktion umgerechnet werden.

6. Verfahren nach Anspruch 5, **dadurch gekennzeichnet, daß** zur Zwischenspeicherung der Ausgangswerte der Rauschquelle ein rückgekoppeltes Schieberegister verwendet wird.

7. Verfahren nach Anspruch 5 oder 6, **dadurch gekennzeichnet, daß** eine kryptographische Hashfunktion als Einwegfunktion verwendet wird.

8. Verfahren nach Anspruch 5 oder 6, **dadurch gekennzeichnet, daß** die Weiterverarbeitung der zwischengespeicherten Ausgangswerte der Rauschquelle mit einem konstanten Takt erfolgt, der niedriger ist, als die Performance der Rauschquelle.

9. Verfahren nach einem der Ansprüche 5 bis 8, **dadurch gekennzeichnet, daß** auf die Ausgangswerte der Rauschquelle selbst nicht zugegriffen werden kann.

## Claims

1. Apparatus for increasing the operational reliability and uniformity of a noise source, where the output of the noise source (10) has an entropy memory (12) connected downstream of it, **characterized in that** the entropy memory (12) has a hardwired one-way function (14) connected directly downstream of it.

2. Apparatus according to Claim 1, **characterized in that** the entropy memory (12) provided is a feedback shift register.

3. Apparatus according to Claim 1 or 2, **characterized in that** the one-way function (14) provided is a cryptographic hash function.

4. Apparatus according to Claim 1 or 2, **characterized in that** the entropy memory (12) is read at a constant frequency which is lower than the performance of the noise source.

5. Method for increasing the operational reliability and uniformity of a noise source, where the output values from the noise source are buffer-stored, **characterized in that** the output values from the noise source are converted by means of a hardwired mathematical one-way function directly after buffer-storage.

6. Method according to Claim 5, **characterized in that** the output values from the noise source are buffer-stored using a feedback shift register.

7. Method according to Claim 5 or 6, **characterized in that** a cryptographic hash function is used as one-way function.

8. Method according to Claim 5 or 6, **characterized in that** the buffer-stored output values from the noise source are processed further at a constant clock rate which is lower than the performance of the noise source.

9. Method according to one of Claims 5 to 8, **characterized in that** it is not possible to access the output values from the noise source itself.

## Revendications

1. Dispositif pour améliorer la sécurité de fonctionnement et l'uniformité d'une source de bruit, dans lequel un accumulateur (12) d'entropie est monté en aval de la sortie de la source (10) de bruit, **caractérisé en ce qu'**une fonction (14) unidirectionnelle câblée est montée directement en aval de l'accumulateur (12) d'entropie.

2. Dispositif suivant la revendication 1, **caractérisé en ce qu'**il est prévu un registre à décalage rétrocouplé comme accumulateur (12) d'entropie.

**3.** Dispositif suivant la revendication 1 ou 2, **caractérisé en ce qu'**il est prévu une fonction de Hash cryptographique comme fonction (14) unidirectionnelle.

**4.** Dispositif suivant la revendication 1 ou 2, **caractérisé en ce que** l'accumulateur (12) d'entropie est lu à une fréquence constante qui est plus basse que la performance de la source de bruit.

**5.** Procédé d'amélioration de la sécurité de fonctionnement et de l'uniformité d'une source de bruit en mémorisant intermédiairement les valeurs de sortie de la source de bruit, **caractérisé en ce que** l'on transforme par le calcul les valeurs de sortie de la source de bruit directement après la mémorisation intermédiaire au moyen d'une fonction mathématique câblée unidirectionnelle.

**6.** Procédé suivant la revendication 5, **caractérisé en ce que** l'on utilise pour la mémorisation intermédiaire des valeurs de sortie de la source de bruit un registre à décalage rétrocouplé.

**7.** Procédé suivant la revendication 5 ou 6, **caractérisé en ce que** l'on utilise comme fonction unidirectionnelle une fonction cryptographique de Hash.

**8.** Procédé suivant la revendication 5 ou 6, **caractérisé en ce que** l'on effectue le traitement ultérieur des valeurs de sortie mémorisées intermédiairement de la source de bruit à une cadence constante qui est plus basse que la performance de la source de bruit.

**9.** Procédé suivant l'une des revendications 5 à 8, **caractérisé en ce que** l'on ne peut pas accéder à la source de bruit soi-même par les valeurs de sortie.

# FIG 1

10       12       14

| physikalische Rauschquelle | → | Entropie-speicher | → | Einweg-funktion | → Nutzdaten |

# FIG 2

10       12

| physikalische Rauschquelle | → | Entropie-speicher | → Output mit Sollfrequenz |

↑

von der Rauschquelle unabhängiger Takt
mit Sollfrequenz